(19) Europäisches Patentamt / European Patent Office / Office européen des brevets

(11) **EP 2 128 586 A1**

(12) **EUROPEAN PATENT APPLICATION**

(43) Date of publication:
**02.12.2009 Bulletin 2009/49**

(51) Int Cl.:
*G01M 5/00* (2006.01)    *G01B 7/16* (2006.01)
*G01N 3/06* (2006.01)

(21) Application number: **08275021.7**

(22) Date of filing: **27.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **BAE Systems PLC**
**London SW1Y 5AD (GB)**

(72) Inventor: **The designation of the inventor has not yet been filed**

(74) Representative: **BAE SYSTEMS plc**
**Group IP Department**
**Lancaster House**
**P.O. Box 87**
**Farnborough Aerospace Centre**
**Farnborough,**
**Hampshire GU14 6YU (GB)**

(54) **Damage Sensors and Processing Arrangements Therefor**

(57) A damage sensing system, and a method of sensing damage using the system, are described. The system comprises: a plurality of tuned circuits arranged in parallel, each tuned circuit having a different resonant frequency; and processing means for discriminating the response of the different tuned circuits according to their respective different resonant frequencies, for example by processing changes in the respective Q-factors of the respective tuned circuits; wherein each of the plurality of tuned circuits comprises a respective damage sensor, each damage sensor comprising at least one direct write resistive element applied to an area of a substrate by a direct write process. Each tuned circuit may comprise a common resistor in series with the respective damage sensor. The plurality of the tuned circuits may be coupled to the processing means by a shared single pair of external connections.

FIG. 7

EP 2 128 586 A1

**Description**

FIELD OF THE INVENTION

The present invention relates to damage sensors and processing arrangements therefor. The present invention is particularly suited to, but not limited to, crack gauges. More particularly, but not exclusively, the present invention relates to damage sensors for detecting the presence and occurrence of damage to a broad variety of structures such as aircraft, ships and bridges.

BACKGROUND

Structures such as aircraft airframes, ships' hulls, and bridges require regular inspections to check for damage. Inspections are currently usually performed manually according to a schedule. These scheduled inspections are precautionary, and, often, no damage is found. Such inspections are very time consuming and thus costly, since the structure will be out of use whilst the inspection is carried out. However, they are necessary since the consequences of structural failure can be catastrophic.

A number of damage or defect sensor systems are currently being developed. These systems aim to eliminate costly manual technology by enabling structures to perform 'self-inspection' using automated networks of sensors. Such self-inspection systems, if available, would allow the owners and operators of structures to benefit from lower operating costs and less frequent disruptions to use, since the structure would only be out of use if actual maintenance, to repair actual damage, were necessary. Owners and operators would also benefit from lower risk of structural failure, and therefore enhanced safety, since self-inspection systems would enable structures to be continuously monitored throughout their lives, and thus any defects in or damage to the structure would be detected sooner.

Many current sensor concepts are described in "Proceedings of the 5th International Workshop on Structural Health Monitoring", Stanford University, Stanford, CA, September 2005, edited by Fu-Kuo Chang. Current techniques use powered, discrete sensors that actively probe structures using ultrasound, or use highly sensitive ultrasonic microphones that 'listen' for cracks. In currently known sensor systems a compromise must be reached between a number of conflicting factors, such as the complexity of the sensor devices, the number needed to cover a given structure, the sensitivity of the sensor devices, the size and weight of sensor installations, and the overall cost of the sensor system. For example, if it is desired to monitor a ship's bulk for damage using prior-known discrete sensors, it is necessary to use a large number of sensors in order to reliably monitor the entire hull with an appropriate degree of sensitivity. However, the cost, complexity and weight of the system increases with the number of sensors used. Furthermore, individual connections must be made to each sensor. The reliability of any electrical system decreases as the number of electrical connections required increases. The production time for the structure also increases as the number of electrical connections increases, thereby also increasing manufacture costs. For example, fitting discrete strain gauges to a modern military aircraft can add several weeks to the production time. Such sensing systems, if used for damage detection are therefore not readily scalable.

One known type of damage sensor is a crack gauge. Crack gauges are used to sense the occurrence of a crack in a surface. Areas that are often monitored due to being prone to cracking due to fatigue or impact are areas around rivet holes and adhesive bond lines. Known crack gauges comprise conductive tracks applied to the structure's surface. When a crack occurs or propagates, the crack breaks the conductive track, and this loss of conduction is sensed, thereby sensing the crack.

A general process for applying sensor and other electronic functionality directly on to structural surfaces is known as direct write. Known forms of direct writing include printing (e.g. ink-jet printing), painting or other forms of depositing materials on to a structural surface in a controlled pattern. In general, examples of directly written features include conductor tracks, as well as more complex multi-layered patterns.

Further details of direct write are as follows. The term direct write (or direct writing) describes a range of technologies which allows the fabrication of two or three-dimensional functional structures using processes that are compatible with being carried out directly onto potentially large complex shapes (DTI Report February 2004 "Direct Writing"). Direct write manufacturing techniques include: ink jet, micro-spray, quill, pen, aerosol, pulsed laser evaporation, and laser direct etching. Direct write has the ability to fabricate active and passive functional devices directly onto structural parts and assemblies.

In general, in direct write processes, writing or printing materials are referred to as inks, although the actual form of the material may comprise a wide range of powders, suspensions, plasters, colloids, solutes, vapours etc, which may be capable of fluid flow and which may be applied in pastes, gels, sprays, aerosols, liquid droplets, liquid flows, etc. Once applied, the material may be fixed by curing, consolidating, sintering or allowing to dry, frequently involving application of heat to change the state of the material to a solid phase. For the purposes of the present specification, the term "direct write ink" is intended to cover all such materials.

The object or structure (which may be a very large three-dimensional object) on which the deposition is performed is referred to in the art by the term "substrate", and this is the sense of the term as used in the present specification. The deposited ink, once fixed on the substrate, forms a component or part of a structure that is to be manufactured.

WO 2007/088395 A1 discloses the use of direct write to form a crack gauge comprising two parallel conductive tracks that act respectively as a probe track and a sense track. Plural conduction-track crack gauges can be individually monitored using frequency selection.

SUMMARY OF THE INVENTION

The present inventors have realised it would be desirable to provide a crack gauge (or other damage sensor) that can be easily provided and monitored.

The present inventors have further realised it would be desirable to provide a crack gauge (or other damage sensor) that can be easily provided in desired shapes or sizes, including on non-flat structural surfaces.

The present inventors have further realised it would be desirable to provide crack gauges (or other damage sensors) that can readily be integrated with RFID (radio frequency identification) antenna circuits.

The present inventors have further realised it would be desirable to provide crack gauges (or other damage sensors) that are able to give a quantitative indication of the size of a crack (or other type of damage), rather than just indicating the occurrence or presence of a crack. For example, although conductive-track gauges as disclosed in WO 2007/088395 A1 can be used to sense the location (i.e. where along the track) a crack occurs, nevertheless the conductive-track track gauges do not provide an indication of the size of a crack.

The present inventors have further realised it would be desirable to provide crack gauges (or other damage sensors) where a quantitative indication of the size of the crack (or other type of damage) is digitized in some manner, i.e. discrete steps of crack size can be sensed.

The present inventors have further realised it would be desirable to provide crack gauges (or other damage sensors) that allow plural crack gauges (or plural other damage sensors) to be monitored by a single monitoring system and connection arrangement, and where moreover respective quantitative indication of crack size from the different crack gauges (or other damage sensors) can be monitored readily.

The present inventors have further realised it would be desirable if such individual quantitative monitoring was simple to perform, robust to interference, and tolerant of drift in crack gauge response.

In a first aspect, the present invention provides a damage sensing system, comprising: a plurality of tuned circuits arranged in parallel, each tuned circuit having a different resonant frequency; and processing means for discriminating the response of the different tuned circuits according to their respective different resonant frequencies; wherein each of the plurality of tuned circuits comprises a respective damage sensor, each damage sensor comprising at least one direct write resistive element applied to an area of a substrate by a direct write process.

Each tuned circuit may comprise a common resistor in series with the respective damage sensor.

The common resistor may be formed by direct write.

Each tuned circuit may comprise a respective LC circuit in series with the respective damage sensor.

The LC circuits may be formed by direct write.

The processing means may be a signal generator and analyser.

The processing means may be arranged to provide a range of driving frequencies and to frequency sweep the resultant signals received back to determine signal amplitudes at different frequencies, and to sense damage by sensing a change in the response due to a resistance change in the direct write resistive element of the damage sensor.

The processing means may be arranged to process changes in the respective Q-factors of the respective tuned circuits.

The plurality of tuned circuits may be coupled to the processing means by a shared single pair of external connections.

The number of tuned circuits may be equal to or greater than 10.

The number of tuned circuits may be equal to or greater than 20.

The number of tuned circuits may be equal to or greater than 50.

The number of tuned circuits may be equal to or greater than 100.

The number of direct write resistive elements in each damage sensor may be one and the damage sensor may further comprise a first direct write conductive track and a second direct write conductive track adjoining respectively two separated portions of the perimeter of the area of the direct write resistive element.

The direct write resistive element may be substantially rectangular shaped, and the two separated portions of the perimeter may be along the respective adjacent lengths of the two opposing sides of the rectangle.

Each damage sensor may comprise a plurality of the direct write resistive elements each extending between and connected to a first direct write track and a second direct write track.

Each damage sensor may comprise: a plurality of the direct write resistive elements each in the form of an annular resistive element, the plural annular resistive elements positioned in an annular arrangement with respect to each other with respective gaps provided between respective annular resistive elements; and conductive tracks between the respective annular resistive elements.

The annular resistive elements may be substantially circular shaped and the centres of each may be substantially collocated.

Each damage sensor may have a resistance greater than or equal to 10Ω.

Each damage sensor may have a resistance greater than or equal to 20Ω.

Each damage sensor may have a resistance greater than or equal to 50Ω.

In a further aspect, the present invention provides a method of sensing damage; the method comprising: providing a plurality of tuned circuits arranged in parallel, each tuned circuit having a different resonant frequency; and discriminating the response of the different tuned circuits according to their respective different resonant frequencies; wherein each of the plurality of tuned circuits comprises a respective damage sensor, each damage sensor comprising at least one direct write resistive element applied to an area of a substrate by a direct write process.

Each tuned circuit may comprise a common resistor in series with the respective damage sensor.

The common resistor may be formed by direct write.

Each tuned circuit may comprise a respective LC circuit in series with the respective damage sensor.

The LC circuits may be formed by direct write.

The discriminating may be performed by a signal generator and analyser.

The method may comprise providing a range of driving frequencies and frequency sweeping the resultant signals received back to determine signal amplitudes at different frequencies, and sensing damage by sensing a change in the response due to a resistance change in the direct write resistive element of the damage sensor.

The method may comprise processing changes in the respective Q-factors of the respective tuned circuits.

The plurality of the tuned circuits may be coupled to means for performing the discriminating by a shared single pair of external connections.

The number of tuned circuits may be equal to or greater than 10.

The number of tuned circuits may be equal to or greater than 20.

The number of tuned circuits may be equal to or greater than 50.

The number of tuned circuits may be equal to or greater than 100.

Each damage sensor may have a resistance greater than or equal to 10Ω.

Each damage sensor may have a resistance greater than or equal to 20Ω.

Each damage sensor may have a resistance greater than or equal to 50Ω.

In a further aspect, the present invention provides a damage sensing system, and a method of sensing damage using the system. The system comprises: a plurality of tuned circuits arranged in parallel, each tuned circuit having a different resonant frequency; and processing means for discriminating the response of the different tuned circuits according to their respective different resonant frequencies, for example by processing changes in the respective Q-factors of the respective tuned circuits; wherein each of the plurality of tuned circuits comprises a respective damage sensor, each damage sensor comprising at least one direct write resistive element applied to an area of a substrate by a direct write process. Each tuned circuit may comprise a common resistor in series with the respective damage sensor. The plurality of the tuned circuits may be coupled to the processing means by a shared single pair of external connections.

BRIEF DESCRIPTION OF THE DRAWINGS

Figure 1 is a schematic illustration of a crack gauge system;

Figure 2 is a schematic illustration of a direct write crack gauge;

Figure 3 is a schematic illustration of a further direct write crack gauge;

Figure 4 is a schematic illustration of a further direct write crack gauge;

Figure 5 is a schematic illustration of a further direct write crack gauge;

Figure 6 is a schematic illustration of a further direct write crack gauge;

Figure 7 is a schematic illustration of a further crack gauge system;

Figure 8 is a schematic illustration (not to scale) of a plot of the resonance peak amplitudes of the signals analysed for the crack gauge system of Figure 7 when no cracks are sensed; and

Figure 9 is a schematic illustration (not to scale) of a plot of the resonance peak amplitudes of the signals analysed for the crack gauge system of Figure 7 when a crack is sensed at a direct write crack gauge of the crack gauge system.

DETAILED DESCRIPTION

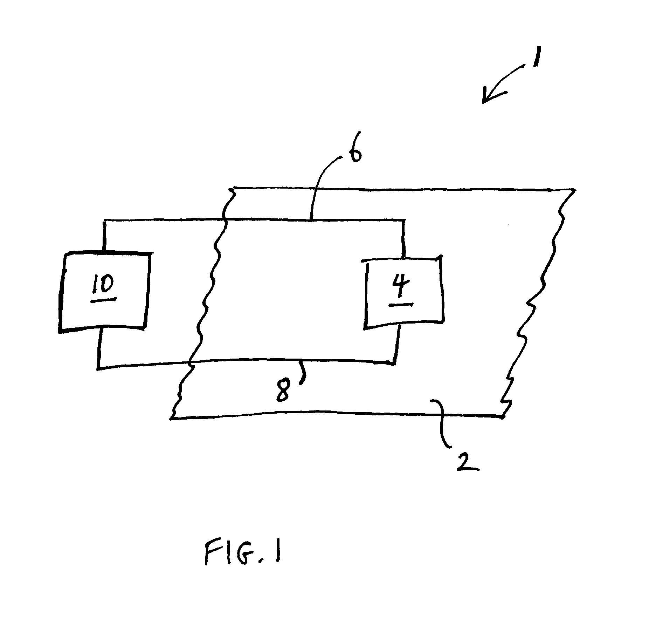

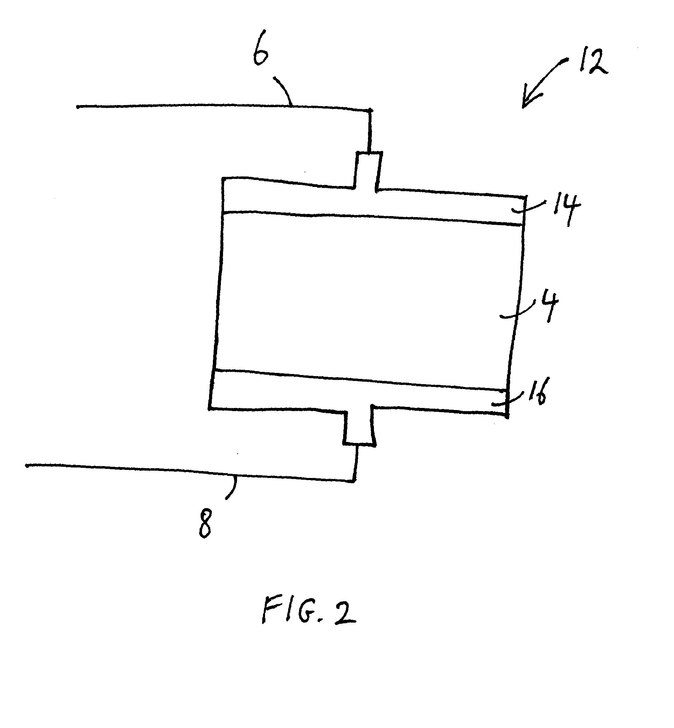

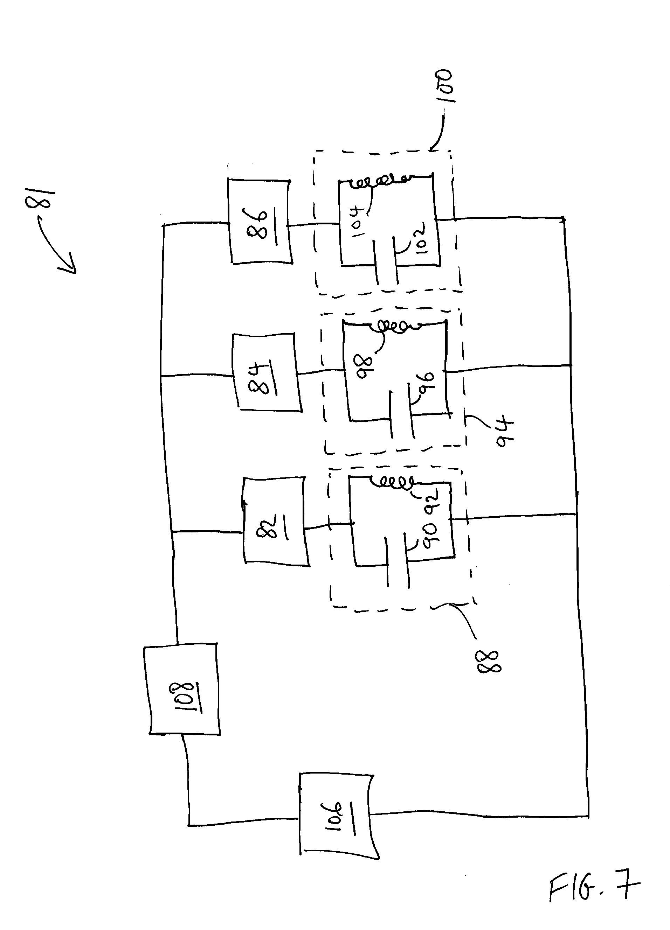

Figure 1 is a schematic illustration of an example of a crack gauge system 1 for sensing cracks on the surface of a substrate 2. The crack gauge system 1, which does not form part of the prior art, is described as an example that is useful for understanding the examples of crack gauges described below with reference to Figures 2-6, and is further useful as a comparative example to aid further understanding of embodiments of crack gauge systems described later below with reference to Figures 7-9.

The crack gauge system 1 comprises an example of a resistive crack gauge, here a direct write resistive element 4 applied to the surface of the substrate 2. The direct write resistive element 4 is connected via two conducting connections, namely first conducting connection 6 and second conductive connection 8, across a processor 10.

The direct write resistive element 4 is formed of an area of resistive ink (or paste) applied to the surface of the substrate 2. In this example the direct write resistive element 4 is applied to the substrate 2 using the dispensing apparatus described by way of example at the end of the description. In this example the resistive ink comprises carbon which may be obtained from Gwent Electronic Materials. In this example the direct write resistive element 4 is square-shaped with sides 15mm long, and the resistance of the direct write resistive element 4 is 230Ω. Other resistance values may be employed in other examples. One criterion for choosing the resistance value is compatibility with measuring instruments forming part of the processor 10. Another particularly convenient value is 105Ω. Resistance values greater than 10Ω, for example greater than 20Ω, or greater than 50Ω, are other useful values.

It will be understood that the term "resistive" as used herein, and as applied to the terminology "resistive elements", will be readily understood by the skilled person as distinct from "conductive elements".

In this example the conducting connections 6, 8 are wires, but in other examples they may be formed by other means, for example conducting tracks applied to the surface of the substrate 2 using direct write.

In this example the processor 10 is a resistance meter, which by virtue of being connected via the connections 6, 8 to the direct write resistive element 4 is able to monitor the resistance of the direct write resistive element 4.

In operation, when a crack occurs in the surface of the substrate 2 under the area of the direct write resistive element 4 this also causes a crack to form in the direct write resistive element 4. The presence of the crack in the direct write resistive element 4 provides a change in the resistance of the direct write resistive element being monitored by the processor 10, and hence the crack in the surface of the substrate 2 is sensed. The crack is sensed in a quantitative manner, in that the size of the change in the resistance of the direct write resistive element 4 depends upon the size of the crack. This also allows crack growth to be monitored, i.e. as the crack increases in size, the change in resistance of the direct write resistive element 4 increases. In particular, even if there is no absolute calibration of crack size versus resistance change, the presence of continuing crack growth can be monitored. It will also be apparent that in the case of a crack that was already present when the direct write resistive element 4 was applied, or in situations where a crack was formed after the direct write resistive element 4 was applied but before monitoring began, then growth of the crack can be detected once monitoring is commenced even if the initial occurrence of the crack is not detected in this particular scenario. Thus in summary the crack gauge 1 is operable to sense occurrence and/or growth of a crack in the surface of the substrate 2.

It will further be apparent that the quantitative indication of crack size offered by the use of the direct write resistive element 4 provides a wide range of processing capabilities. By way of a simple example, a system may be arranged to give an intermediate "warning" indication when the resistance change is within a predetermined range, and an "alarm" condition when the resistance change is greater than the predetermined range. A crack completely across the direct write resistive element that causes therefore an open circuit between the two conducting connections 6, 8 may be included in the alarm condition, or may represent a further higher state of alarm, for example. It will be appreciated that the skilled person can implement many possible arrangements making use of the advantageous aspect of quantitative crack size/growth indication provided by the direct write resistive element.

Figure 2 is a schematic illustration of a further example of a direct write crack gauge 12 for sensing cracks on the surface of a substrate 2, that may be used in the above described crack gauge system 1. Items in Figure 2 that are the same as corresponding items in Figure 1 are indicated by the same reference numerals. The direct write crack gauge 12 comprises a direct write resistive element 4 and two direct write conductive tracks, namely first direct write conductive track 14 and second direct write conductive track 16, adjoining respectively two separated portions of the perimeter of the area of the direct write resistive element 4. The first direct write conductive track 14 is connected to the first conductive connection 6. The second direct write conductive track 16 is connected to the second conductive connection 6. Thus, as described above with respect to Figure 1, the processor 10 (not shown in Figure 2), by virtue of being connected via the conductive connections 6, 8 to the direct write resistive element 4 is able to monitor the resistance of the direct write crack gauge 12.

In this example, the direct write resistive element is of substantially rectangular shaped area, and the two respective separated portions of the perimeter of the area of the direct write resistive element 4 where the two direct write conductive tracks 14, 16 are provided are the respective entire lengths of two opposing sides of the rectangle. However, this need not be the case, and in other examples other locations are possible. For example, the two opposite sides of the rectangle may be the two portions, but the direct write conductive tracks 14, 16 may not extend along the whole length of one or both sides of the rectangle. Furthermore, in other examples the area of the direct write resistive element 4 may be a shape other than substantially rectangular, in which case the locations and extent may be selected by the skilled person according to any appropriate aspect of the design or use under consideration.

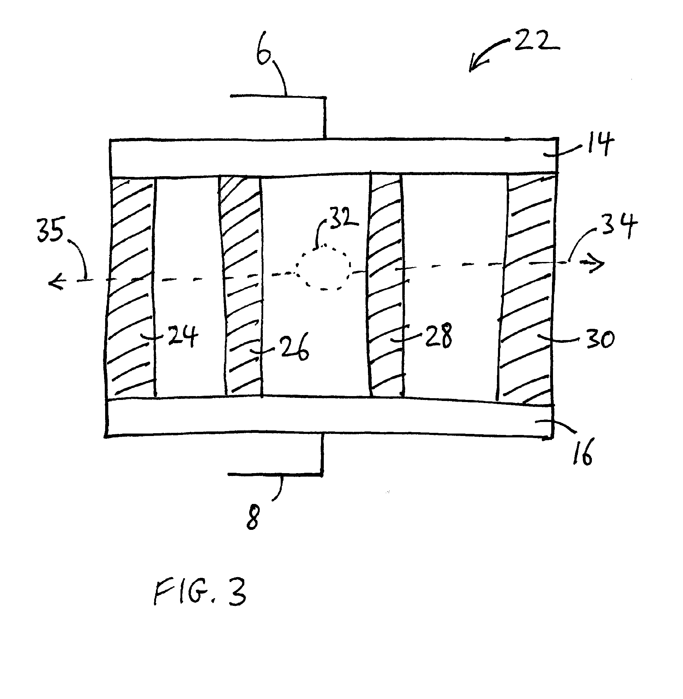

Furthermore, in this example the direct write conductive tracks 14, 16 are each substantially shaped in the form of thin rectangular strips with one side corresponding to the straight side of the area of the direct write resistive element 4, plus a tab-like area extending away from the rectangular strip for the purpose of providing a convenient connection area for the conductive connections 6, 8. However, in other examples the direct write conductive tracks may be provided in other shapes as required, including without the tab-like feature (as shown for example in later Figure 3).

The direct write crack gauge 12, comprising a direct write resistive element 4 as described above with reference to Figure 1, but with direct write conductive tracks 14, 16 at opposing sides of the direct write resistive element 4, operates in the same fashion as the crack gauge described above with reference to Figure 1 to sense the occurrence and/or growth of a crack, but with a tendency or capability to provide an improved reproducibility or uniformity of calibration with respect to the crack gauge of Figure 1. In particular, the magnitude of any resistance change in the direct write crack gauge 12 is less dependent on whereabouts in the area of the direct write resistive element 4 the crack is, as the extension of the direct write conductive tracks 14, 16 provides in effect an averaging of the localised resistance change in the direct write resistive element 4 caused by the crack.

Figure 3 is a schematic illustration of a further example of a direct write crack gauge 22 for sensing cracks on the surface of a substrate 2, that may be used in the above described crack gauge system 1. Items in Figure 3 that are the same as corresponding items in Figure 1 and/or Figure 2 are indicated by the same reference numerals. The direct write crack gauge 22 comprises a plurality of separate direct write resistive elements each extending between and connected to the first direct write conductive track 14 and the second conductive track 16. Thus an overall resistance of the direct write crack gauge 22 is provided that is constituted by the plural direct write resistive elements arranged and connected electrically-in-parallel. In this example, there are four direct write resistive elements, namely first direct write resistive element 24, second direct write resistive element 26, third direct write resistive element 28 and fourth direct write resistive element 30. Each direct write resistive element 24, 26, 28, 30 is applied to the surface of the substrate 2 in the same manner, and is of the same material as, the direct write resistive element 4 described above with reference to Figure 1. In this example the areas of each direct write resistive element 24, 26, 28, 30 is of approximately the same dimensions in the form of a thin substantially rectangular shape, the dimensions in this example of each element being approximately 15mm long by 0.3mm wide, with the elements spaced apart at a pitch of approximately 0.5mm. In this example the direct write conductive tracks 14, 16 are each substantially shaped in the form of thin rectangular strips, with their long sides substantially perpendicular to the long sides of the direct write resistive elements 24, 26, 28, 30.

The first direct write conductive track 14 is connected to the first conductive connection 6. The second direct write conductive track 16 is connected to the second conductive connection 8. Thus, in the same manner as described above with respect to Figure 1, the processor 10 (not shown in Figure 3), by virtue of being connected via the conductive connections 6, 8 to the direct write crack gauge 22, is able to monitor the overall resistance of the direct write crack gauge 22.

The direct write crack gauge 22 operates in corresponding fashion to the crack gauges described above with reference to Figures 1 and 2 to sense the occurrence and/or growth of a crack, but with the difference that the resistance that is monitored for changes produced by a crack is the overall resistance of the electrically-in-parallel arrangement of the plural direct write resistive elements 24, 26, 28, 30.

As with the examples described with respect to Figures 1 and 2, this example provides quantitative sensing of the size and/or growth of a crack. However, by provision of plural separate write resistive elements as described above, this example additionally offers a tendency or capability to provide a quantized or digitized form of sensing of the crack size or growth. For example, this example readily allows the sensing to distinguish or indicate whether the crack extends over one, two, three or all four of the direct write resistive elements 24, 26, 28, 30, whilst only employing one pair of conductive connections 6, 8.

Figure 3 also shows one example of a particularly advantageous location for the direct write crack gauge 22, namely centred about a hole 32 in the structure of the substrate 2. Holes, e.g. rivet holes, in substrate structures are a typical location where the likelihood of crack formation is increased, hence depositing the direct write crack gauge 22 around such a hole enables the hole to be monitored for crack formation. In this example, the direct write crack gauge 22 is positioned such that the hole 32 lies in the space between the second direct write resistive element 26 and the third direct write resistive element 28. Further shown in Figure 3 are exemplary predicted crack propagation directions 34 and 35. By positioning the direct write crack gauge 22 as described, the direct write crack gauge 22 is able to sense a crack size quantitatively in a quantized fashion for both the examples of crack propagation direction 34, 35 shown.

In this example each direct write resistive element is substantially the same length, width and thickness, and is made of the same direct write ink. Consequently, the resistance of each direct write resistive element is substantially equal, providing a substantially linear form of digitization, which will often be advantageous. However, for some applications a non-linear response may be desirable. Hence in other examples the resistance of each annular direct write resistive element may be tailored so that the resistance increases, for example, for the outer resistive elements, e.g. elements 24, 26 compared to the inner elements 26, 28. Another possibility is for the resistance to increase from one side of the direct write crack gauge to the other, for example increasing resistance of element moving from the first direct write resistive element 24 to the fourth direct write resistive element 30. The differing resistances may be implemented by having different widths of the direct write resistive elements and/or different thicknesses of the resistive material and/or by being made of different resistivity materials.

In this example, as shown in Figure 3, first and second direct write conductive tracks 14, 16 are provided at the ends of the plural direct write resistive elements 24, 26, 28, 30. However, this need not be the case, and in other examples resistive direct write tracks, for example of the same material as the direct write resistive elements 24, 26, 28, 30, may be provided instead of the conductive tracks. This would disadvantageously tend to be less suitable for calibration and would tend to provide a less-linear digitization compared to the use of conductive tracks, due to the resulting different resistive paths that would be different depending on where the crack was. Nevertheless, such examples would instead tend to have trade-off advantages such as simplified manufacture and/or better lifetimes due to a lower number of different materials needing to be deposited.

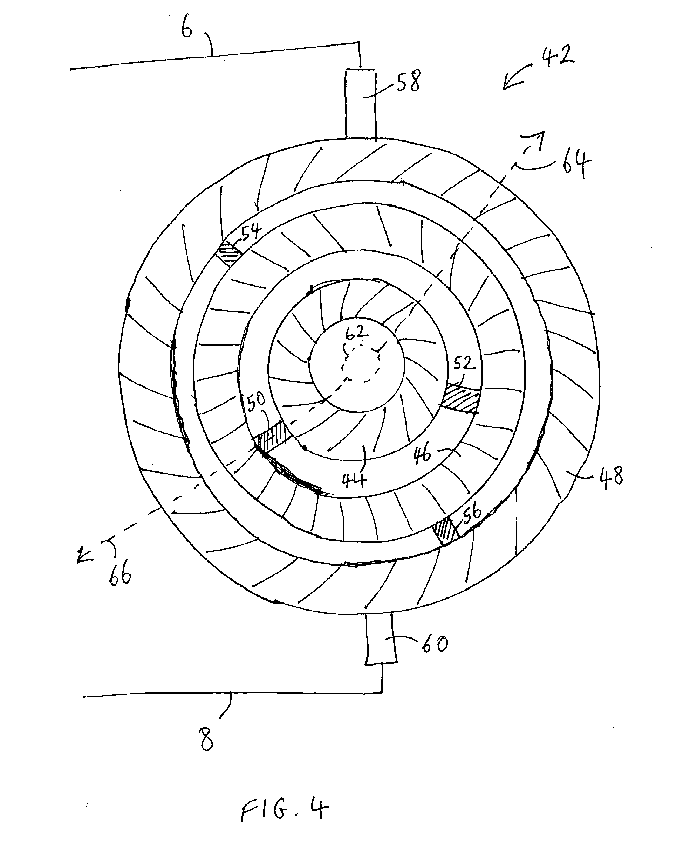

Figure 4 is a schematic illustration of a further example of a direct write crack gauge 42 for sensing cracks on the surface of a substrate 2, that may be used in the above described crack gauge system 1. Items in Figure 4 that are the same as corresponding items in Figure 1 and/or Figure 2 and/or Figure 3 are indicated by the same reference numerals. The direct write crack gauge 42 comprises a plurality of separate spaced apart annular direct write resistive elements each centred around a common centre point.

In particular, the direct write crack gauge 42 comprises a first annular direct write resistive element 44, a second annular direct write resistive element 46, and a third annular direct write resistive element 48. The inner diameter of the second annular direct write resistive element 46 is larger than the outer diameter of the first annular direct write resistive element 44 so as to provide a gap between the outer circumference of the first annular direct write resistive element 44 and the inner circumference of the second annular direct write resistive element 46. Likewise, the inner diameter of the third annular direct write resistive element 48 is larger than the outer diameter of the second annular direct write resistive element 46 so as to provide a gap between the outer circumference of the second annular direct write resistive element 46 and the inner circumference of the third annular direct write resistive element 48.

Each annular direct write resistive element 44, 46, 48 is applied to the surface of the substrate 2 in the same manner, and is of the same material as, the direct write resistive element 4 described above with reference to Figure 1. In this example each annular direct write resistive element 44, 46, 48 is of approximately the same annular width, in this example being approximately 0.3mm, with the radial gaps between the annular elements also being approximately 0.3mm. Other values may be used in other examples, and the gaps need not be the same size as the element widths. The resistance values are of the same order as those in the above described examples.

Two conducting connections, namely a first ring-connecting direct write conductive track 50 and a second ring-connecting direct write conductive track 52, are provided between the first annular direct write resistive element 44 and the second annular direct write resistive element 46. Likewise, two conducting connections, namely a third ring-connecting direct write conductive track 54 and a fourth ring-connecting direct write conductive track 56 are provided between the second annular direct write resistive element 46 and the third annular direct write resistive element 48.

Two external direct write conductive connections, namely a first external direct write conductive track 58 and a second external direct write conductive track 60, are provided for external connection to the third annular direct write resistive element 48.

Thus an overall resistance of the direct write crack gauge 42 is provided that is constituted by the plural annular direct write resistive elements arranged and connected as described.

The first external direct write conductive track 58 is connected to the first conductive connection 6. The second external direct write conductive track 60 is connected to the second conductive connection 8. Thus, in the same manner as described above with respect to Figure 1, the processor 10 (not shown in Figure 3), by virtue of being connected via the conductive connections 6, 8 to the direct write crack gauge 42, is able to monitor the overall resistance of the direct write crack gauge 42.

The direct write crack gauge 22 operates in corresponding fashion to the crack gauges described above with reference to Figures 1, 2 and 3 to sense the occurrence and/or growth of a crack, but with the difference that the resistance that is monitored for changes produced by a crack is the overall resistance of the plural annular direct write resistive elements 44, 46, 48 arranged and connected as described.

As with the examples described with respect to Figures 1 and 2, this example provides quantitative sensing of the size and/or growth of a crack. Also, by provision of plural separate direct write resistive elements, this example also offers a tendency or capability to provide a quantized or digitized form of sensing of the crack size or growth, in similar fashion to that of Figure 3. For example, this example readily allows the sensing to distinguish or indicate whether the crack extends over one, two or all three of the annular direct write resistive elements 44, 46, 48, whilst only employing one pair of conductive connections 6, 8.

Furthermore, by providing the plural separate direct write resistive elements in an annular arrangement, this example further offers a tendency or capability to provide crack sensing any direction of crack growth.

Figure 4 also shows one example of a particularly advantageous location for the direct write crack gauge 42, namely centred about a hole 62 in the structure of the substrate 2. As mentioned previously, holes, e.g. rivet holes, in substrate structures are a typical location where the likelihood of crack formation is increased, hence depositing the direct write crack gauge 42 around such a hole enables the hole to be monitored for crack formation. This is particularly advantageous in this example, as crack growth in any direction from the hole can thus be sensed. Further shown in Figure 4 is a first hypothetical example of a crack propagation direction 64. By designing the widths of the various direct write conductive tracks 50, 52, 54, 56, 58, 60 relatively thin, usually sensing of a crack's growth will not be affected by the crack passing through one of the conductive tracks, i.e. such a non-affected example is given by propagation direction 64.

In this example a further feature is provided that further reduces the affect of a crack passing through one of the conductive tracks, namely certain of the various direct write conductive tracks. In this example the first ring connecting direct write conductive track 50, the second ring connecting direct write conductive track 52, the third ring connecting direct write conductive track 54, and the fourth ring connecting direct write conductive track 56, are positioned in a staggered layout, i.e. not on a common diameter. Thus, for example, a second hypothetical example of a crack propagation direction 66 shown in Figure 4, which is shown for example passing through the first ring connecting direct write conductive track 50, does not pass through any other track.

In this example, as mentioned above, the different annular direct write resistive elements 44, 46, 48 are of the same material and have the same annular width. Consequently, the resistance of each element increases moving out from the first annular direct write resistive elements 44 to the third annular direct write resistive elements 48 due to increasing path lengths, thus increase in resistance with crack growth will be non-linear. This may be an advantage in certain applications. However, in other applications a more linear response of resistance to crack length would be desirable. Hence in other examples the resistance of each annular direct write resistive element may be tailored so that the resistance is, for example, the same for each annular direct write resistive element. This may be implemented by having different annular widths and/or different thicknesses of the resistive material and/or by being made of different resistivity materials.

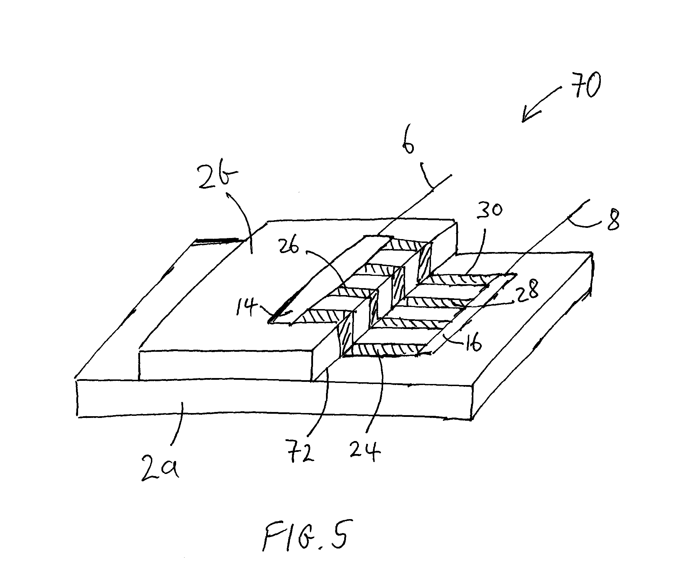

Figure 5 is a schematic illustration of a further example of a direct write crack gauge 70 for sensing cracks that may be used in the above described crack gauge system 1. The direct write crack gauge 70 is based on the direct write crack gauge 22 shown in Figure 3, but is adapted to sense de-bonding of two bonded substrates 2a and 2b. Items in Figure 5 that are the same as corresponding items in Figure 3 are indicated by the same reference numerals. As before, the direct write crack gauge 70 comprises a plurality of separate direct write resistive elements 24, 26, 28, 30, each extending between and connected to the first direct write conductive track 14 and the second conductive track 16. In order to sense a loss in the integrity (i.e. monitor the integrity) of a bonded edge 72 between the lower substrate 2a and the upper substrate 2b, the direct write crack gauge 70 extends over part of the surface of the upper substrate 2b, over the bonded edge 72, and over part of the lower substrate 2. The plurality of separate direct write resistive elements 24, 26, 28, 30 are parallel to each other geometrically and are connected electrically in parallel as well. Each of the direct write resistive elements 24, 26, 28, 30 is provided partly on part of the top surface of the upper substrate 2b, partly on and edge surface of the upper substrate 2b, and partly on the top surface of the lower substrate 2a.

Thus in this example the direct write crack gauge 70 performs sensing of de-bonding or other cracking on, or between, the substrates 2a and 2b, in particular at the bonded edge 72. Such sensing can moreover be performed in a quantitative, quantized or digitized form as described above with reference to Figure 3.

In other embodiments, other crack gauges, e.g. ones based on those described with reference to Figures 1, 2 and 4, may also be applied over the different substrate surfaces in corresponding fashion to that described above with regard to Figure 5 which is based on the crack gauge of Figure 3.

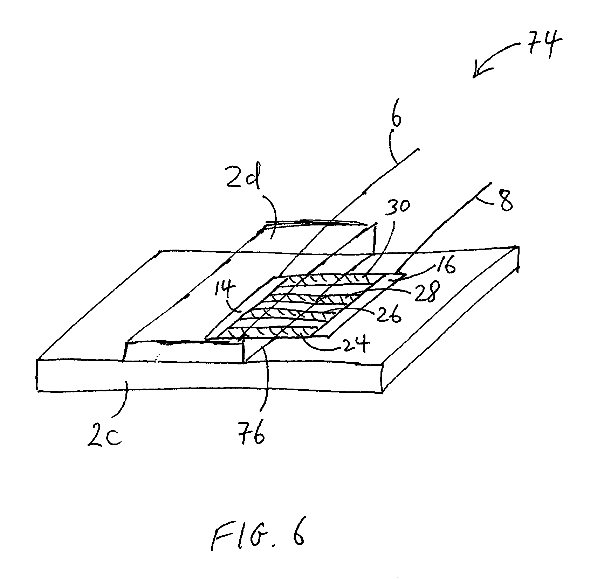

Figure 6 is a schematic illustration of a further example of a direct write crack gauge 74 for sensing cracks that may be used in the above described crack gauge system 1. The direct write crack gauge 74 is based on the direct write crack gauge 22 shown in Figure 3, but is adapted to sense de-bonding of two bonded substrates 2c and 2d. Items in Figure 6 that are the same as corresponding items in Figure 3 are indicated by the same reference numerals. As before, the direct write crack gauge 74 comprises a plurality of separate direct write resistive elements 24, 26, 28, 30, each extending between and connected to the first direct write conductive track 14 and the second conductive track 16. In order to sense a loss in the integrity (i.e. monitor the integrity) of a bonded edge 76 between the lower substrate 2c and the upper substrate 2d, the direct write crack gauge 70 is initially deposited on part of the upper surface of the lower substrate 2c. The plurality of separate direct write resistive elements 24, 26, 28, 30 are parallel to each other geometrically and are connected electrically in parallel as well. Each of the direct write resistive elements 24, 26, 28, 30 is provided initially the top surface of the lower substrate 2c. When the upper substrate 2d is laminated to the lower substrate 2c, this is done such that the edge of the upper substrate 2d lies within the extent of the direct write crack gauge 74 such that a bonded edge 76 between the upper substrate 2d and the lower substrate 2c lies over and crosses the direct write resistive elements 24, 26, 28, 30. The lamination of the upper substrate 2d to the lower substrate 2c is performed such that the direct write crack gauge 74, and in particular the direct write resistive elements 24, 26, 28, 30, become attached to the upper substrate 2d (where the upper substrate lies over them) in addition to their existing attachment to the lower substrate 2c.

Thus in this example the direct write crack gauge 74 performs sensing of de-bonding or other cracking on, or between, the substrates 2a and 2b, in particular at the bonded edge 76. Such sensing can moreover be performed in a quantitative, quantized or digitized form as described above with reference to Figure 3.

In other embodiments, other crack gauges, e.g. ones based on those described with reference to Figures 1, 2 and 4, may also be applied over the different substrate surfaces in corresponding fashion to that described above with regard to Figure 6 which is based on the crack gauge of Figure 3.

The particular shapes and layout arrangements of the above examples are not limiting, and in other examples other shapes and layout arrangements may be employed. For example, direct write resistive elements may be shaped other than rectangular, e.g. other regular shapes may be used, or less nonuniform shapes may be used. Further, for example, in the case of the device shown in Figure 3, the direct write resistive elements need not be physically or geometrically parallel as such, provided they are electrically-in-parallel. Also, the number of resistive elements in any given device may be specified as required, i.e. the number of resistive elements in the device shown in Figure 3 need not be four, and could instead be any desired number depending on the circumstances in which the device is to be employed. By providing a larger number of resistive elements, the quantization of the sensing can be performed at greater resolution. Likewise, in devices along the lines of that shown in Figure 4, different numbers of annular rings other than three may be implemented. Furthermore, each annular element can be in a shape other than a circle or ring. Furthermore, the different annular resistive elements need not be centred around the same point, provided they nevertheless surround each other respectively.

In the above examples, the direct write resistive elements (and where applicable other types of direct write components) are described as being deposited onto the substrate 2. It will be appreciated that such terminology, and in a more general sense the terminology "direct write" in itself, as used in this specification encompasses situations where one or more intermediate layers, coatings or other materials are present between the substrate (or structure being monitored) and the directly-written resistive element (or other direct write component). In other words, the resistive elements as applied to a substrate are still encompassed by the terminology direct write resistive elements when they are written onto a coating or other layer on the substrate or other form a structure to be tested.

In the above examples, crack gauges are implemented, including ones for monitoring bonded edges. However, in other examples, structures as described above can be implemented as sensors other than crack gauges, i.e. other types of damage sensors can be implemented by the structures described above. Other types of damage sensors that can be implemented include, for example, sensors that detect surface shape or condition change other than a crack as such. Indeed, any damage sensor application can be envisaged where the direct write resistive element applied to the surface will be disrupted in terms of its resistance path by a physical change to the surface of the object where the direct write resistive element is provided.

A further advantage of the above described examples of crack gauges (or other damage sensors) is that in further examples they may be easily integrated into RFID (radio frequency identification) antenna circuits, thereby offering a convenient form of wireless monitoring of crack gauges.

Figure 7 is a schematic illustration of an embodiment of a crack gauge system 81 for sensing cracks on the surface of a substrate 2. The crack gauge system 81 comprises three direct write crack gauges arranged in parallel, namely a first direct write crack gauge 82, a second direct write crack gauge 84, and a third direct write crack gauge 86. The direct write crack gauges 82, 84, 86 are any of the types described above with reference to Figures 1-6 (or any other appropriate type of damage sensor as discussed above). Also, any other variations thereof may be used, provided they give a varying resistance derived from one or more resistive elements in response to crack occurrence or growth or other sensed behaviour.

Each direct write crack gauge 82, 84, 86 is connected in series to a respective LC circuit comprising a capacitor and an inductor connected in parallel, as follows. The first direct write crack gauge 82 is connected in series to a first LC circuit 88, the first LC circuit 88 comprising a first capacitor 90 and a first inductor 92 connected in parallel. The second direct write crack gauge 84 is connected in series to a second LC circuit 94, the second LC circuit 94 comprising a second capacitor 96 and a second inductor 98 connected in parallel. The third direct write crack gauge 86 is connected in series to a third LC circuit 100, the third LC circuit 100 comprising a third capacitor 102 and a third inductor 104 connected in parallel.

Each of the direct write crack gauges 82, 84, 86 with their respective series connected tuned circuit 88, 94, 100 are connected across a signal generator and analyser 106. A common resistor 108 is connected between the signal generator and analyser 106 and all of the direct write crack gauges 82, 84,86.

Thus, since each direct write crack gauge is essentially formed of resistive material as described above, each direct write crack gauge forms a net series resistance with the common resistor 108, and this net series resistance (i.e. total resistance of the common resistor 108 and the resistance of the respective direct write crack gauge) provides the resistance component of a respective tuned LCR circuit comprising the respective LC circuit and the respective net series resistance, as follows. The first direct write crack gauge 82 and the common resistor 108 provide the resistance part of a first tuned circuit that further comprises the first capacitor 90 and the first inductor 92. The second direct write crack gauge 84 and the common resistor 108 provide the resistance part of a second tuned circuit that further comprises the second capacitor 96 and the second inductor 98. The third direct write crack gauge 86 and the common resistor 108 provide the resistance part of a third tuned circuit that further comprises the third capacitor 102 and the third inductor 92.

In this embodiment the capacitors 90, 96, 102, and inductors 92, 98, 104, are formed by direct write on the substrate 2. However, in other embodiments, discrete components may be used.

The resonant frequency of oscillation is different for each tuned circuit. This is most conveniently done by selection of the capacitance and/or inductance values of the LC circuits, but it is also possible to use different resistance values for the direct write crack gauges. In this embodiment, the resonant frequency of the first tuned circuit is 2MHz, the resonant frequency of the second tuned circuit is 6MHz, and the resonant frequency of the third tuned circuit is 10MHz.

The signal generator and analyser 108 is operable to provide a range of driving frequencies and to frequency sweep the resultant signals received back to determine signal amplitudes at different frequencies, in particular at frequencies encompassing the resonant frequencies of the tuned circuits.

When there is no crack change, the resistance value of each direct write crack gauge will be at its initial value, and hence the tuned circuit will be at its resonant frequency. However, when a crack occurs or grows at a direct write crack gauge, the resistance of the direct write crack gauge will change (usually will increase), thus the resistance of the net series resistance for that tuned circuit as provided by the common resistor in series with the direct write crack gauge will change, and hence the response of the signal generator and analyser 108 at that tuned circuit's resonant frequency will change. By sensing this change, the crack occurrence or growth is sensed.

Thus each direct write crack gauge can be monitored separately, yet this is achieved by the provision of just a single pair of external connections back to the signal generator and analyser. Moreover, each direct write crack gauge provides a quantitative change in resistance that varies with crack size, as described earlier above, hence overall the crack gauge system 81 provides quantitative monitoring of crack growth sensing at plural discrete locations using only one pair of external connections (i.e. the connections to the signal generator and analyser 106).

In other embodiments, apparatus other than a signal generator and analyser as such may be employed to perform the role of the above described signal generator and analyser.

The provision of multiple direct write crack gauges in a system with only one pair of external connections firstly provides a simple and cost-efficient system in terms of design, installation, cost and so on. Moreover, such provision also tends to provide a system that is particularly stable to electrical and/or electromagnetic interference since there are fewer connections and less wiring that can act undesirably as antennae for receiving interference. Yet further, such provision also tends to provide good stability with regard to drift of component values, in particular resistance, due to ageing, temperature change and so on, since the measurement is frequency/time based rather than necessarily being absolute voltage amplitude based.

In this embodiment the number of direct write crack gauges monitored by the single pair of external connections is three. However, in other embodiments any appropriate number may be implemented, and it will be appreciated that some or all of the advantages outlined above are capable of being further dramatically amplified when the crack gauge system is implemented with a large number of direct write crack gauges, for example ten, twenty, fifty, one hundred, or even more than one hundred direct write gauges.

In this embodiment, the common resistor 108 is formed by direct write on the substrate 2. However, in other embodiments, one or more discrete components may be used to provide the common resistor.

Also, in this embodiment, the common resistor 108 is provided to reduce the absolute requirement values of the resistances of the direct write crack gauges. However, in other embodiments, the common resistor can be omitted and the resistance value of the direct write crack gauges selected and provided accordingly. Another possibility is that either in addition to, or instead of, the provision of the common resistor, a separate resistor for each tuned circuit is provided in each tuned circuit.

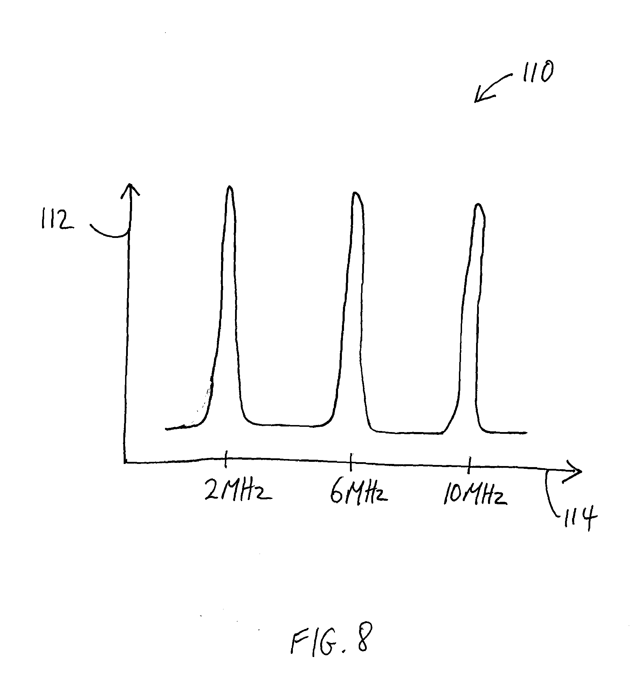

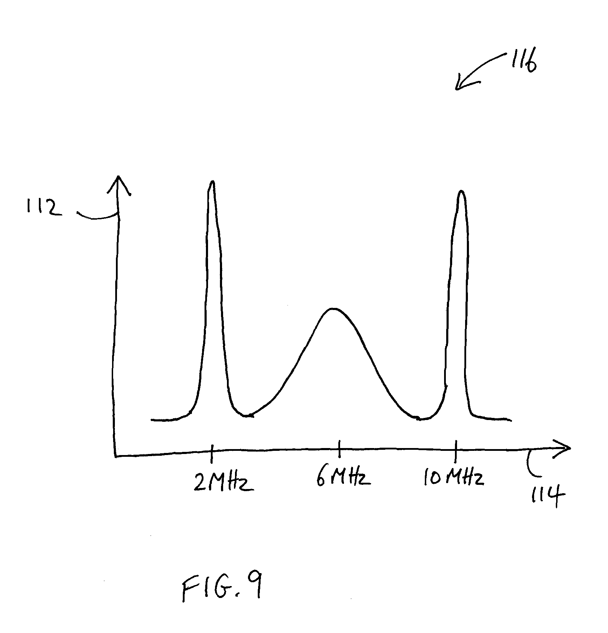

Any suitable approach can be used to analyse the change in response of the tuned circuits of the direct write crack gauges at the respective resonant frequencies. In this embodiment, a particularly advantageous approach including consideration of the respective Q-factors of the tuned circuits is used, as will now be described in more detail with reference to Figures 8 and 9.

Figure 8 is a schematic illustration (not to scale) of a plot of the resonance peak amplitudes 110 of the signals analysed for the crack gauge system 81 of Figure 7 when no cracks are sensed, i.e. the direct write crack gauges are all at their initial resistance values. The plot is in terms of signal strength (voltage) whose axis is indicated by reference numeral 112 and frequency whose axis is indicated by reference numeral 114. In particular, the respective resonance peak amplitudes of the three tuned circuits are present at the three respective resonant frequencies (as described above) of 2MHz, 6MHz and 10Mhz. As shown schematically, the three respective resonance peak amplitudes are all substantially equal, and the resonant peaks are all equally substantially of the same width; i.e. the three tuned circuits each have nominally maximum Q-factor values.

Figure 9 is a schematic illustration (not to scale) of a plot of the resonance peak amplitudes 116 of the signals analysed for the crack gauge system 81 of Figure 7 when a crack is sensed at the second direct write crack gauge 84. In the same manner as with Figure 8, the plot is in terms of signal strength (voltage) whose axis is indicated by reference numeral 112 and frequency whose axis is indicated by reference numeral 114. In particular, the respective resonance peak amplitudes of the three tuned circuits are present at the three respective resonant frequencies (as described above) of 2MHz, 6MHz and 10Mhz. As shown schematically, the first and third respective resonance peak amplitudes are substantially equal to each other, and these two resonant peaks are substantially of the same width as each other; i.e. the corresponding first and third tuned circuits have the same Q-factor values as in Figure 8. However, due to the change in resistance of the second direct write crack gauge 84 due to the crack, the second resonance peak amplitude (i.e. the one for 6MHz) is lower than the other two resonance peak amplitudes, and the second resonance peak (i.e. the one for 6MHz) is also wider than the other two; i.e. the Q-factor of the second tuned circuit is lower than it was previously in Figure 8. As the crack size increases, the second resonance peak amplitude (i.e. the one for 6MHz) will tend to become even lower and the second resonance peak (i.e. the one for 6MHz) will also tend to become even wider; i.e. the Q-factor of the second tuned circuit will tend to become even lower. In the extreme, the second resonance peak may disappear.

By arranging the signal generator to analyse the Q-factors of the different tuned circuits, either for absolute values or relative values, the crack occurrence or growth can accordingly be sensed and monitored. For the above described tuned circuits, the Q-factor is given by the equation:

$$Q = \frac{1}{R}\sqrt{\frac{L}{C}}$$

where R is the net resistance of the common resistor 108 in series with the resistance of the respective direct write crack gauge, L is the inductance of the respective inductor of the respective LC circuit, and C is the capacitance of the respective capacitor of the respective LC circuit.

The dispensing apparatus mentioned in the description of Figure 1 will now be described (by way of example of a suitable dispensing apparatus). An nScrypt "Smart Pump" is specified to dispense lines down to 50μm wide and onto conformal surfaces where the angle of the substrate is below 30°. The theoretical track resolution with a "micro pen" system is 100μm using a 75μm outer diameter tip, although the narrowest lines produced to date are approximately 230μm wide using a 175μm outer diameter tip.

To assist with the materials characterisation and process optimisation, an Intertronics DK118 Digital Dispenser is used, which is a bench top syringe system using a simple pressure regulator to provide material flow. The output pressure can be set from 1Psi to 100Psi in increments of 1 Psi and the barrel suck-back feature prevents low viscosity materials from dripping. An I/O port allows the dispenser to be interfaced with external devices. The resolution of this dispensing technique is limited by the size and tolerance of the nozzles available. The nozzles have a stainless steel barrel and it is the outer diameter of this that indicates the width of the track. The track width and height can then advantageously be tailored by varying the offset between the substrate and nozzle or by changing the speed of the motion platform. Similarly, the quality of the starts of tracks can be improved by adjusting the timing between the XY motion start and switching on the pressure.

The offset between the direct write tip and the substrate must be maintained during deposition as this influences the track dimensions. If the tip is too high the ink will not flow onto the surface, and if it is too low no ink will flow and there is a danger of damaging the tip. Typically this offset is between 50μm and 200μm depending on the width of the track being written. A Keyence LK081 laser displacement sensor is mounted on the Z stage. This laser sensor has a working distance of 80mm, a 70μm spot size, a measuring range of ±15mm and ±3μm resolution. The accuracy of the height information provided reflects the accuracy of the XY and Z motion stages as well as the accuracy of the displacement sensor.

This system has been found to perform with a greater degree of accuracy and control than expected. The smallest nozzle available for use with the Intertronics syringe has an outer diameter of less than 200μm, therefore the minimum track width attainable is approximately 200μm. The digital dispenser takes less time to optimise than the Smart Pump, meaning that it is preferable to the Smart Pump where larger feature sizes are required.

The ink is cured following deposition.

It is to be understood that any feature described in relation to any one embodiment may be used alone, or in combination with other features described, and may also be used in combination with one or more features of any other of the embodiments, or any combination of any other of the embodiments. Further, equivalents and modifications not described above may also be employed without departing from the scope of the invention, which is defined in the accompanying claims.

**Claims**

1. A damage sensing system, comprising:

   a plurality of tuned circuits arranged in parallel, each tuned circuit having a different resonant frequency; and
   processing means for discriminating the response of the different tuned circuits according to their respective different resonant frequencies;

   wherein each of the plurality of tuned circuits comprises a respective damage sensor, each damage sensor comprising at least one direct write resistive element applied to an area of a substrate by a direct write process.

2. A system according to claim 1, wherein each tuned circuit comprises a respective LC circuit in series with the respective damage sensor.

3. A system according to claim 2, wherein the LC circuits are formed by direct write.

4. A system according to any of claims 1 to 3, wherein the processing means is arranged to provide a range of driving frequencies and to frequency sweep the resultant signals received back to determine signal amplitudes at different frequencies, and to sense damage by sensing a change in the response due to a resistance change in the direct write resistive element of the damage sensor.

5. A system according to any of claims 1 to 4, wherein the processing means is arranged to process changes in the respective Q-factors of the respective tuned circuits.

6. A system according to any of claims 1 to 5, wherein the plurality of the tuned circuits are coupled to the processing means by a shared single pair of external connections.

7. A system according to any of claims 1 to 6, wherein the number of tuned circuits is equal to or greater than 10.

8. A system according to any of claims 1 to 7, wherein each damage sensor comprises a plurality of the direct write resistive elements each extending between and connected to a first direct write track and a second direct write track.

9. A system according to any of claims 1 to 8, wherein each damage sensor has a resistance greater than or equal to 10$\Omega$.

10. A method of sensing damage; the method comprising:

    providing a plurality of tuned circuits arranged in parallel, each tuned circuit having a different resonant frequency; and
    discriminating the response of the different tuned circuits according to their respective different resonant frequencies;

    wherein each of the plurality of tuned circuits comprises a respective damage sensor, each damage sensor comprising at least one direct write resistive element applied to an area of a substrate by a direct write process.

11. A method according to claim 10, wherein each tuned circuit comprises a common resistor in series with the respective damage sensor.

12. A method according to claim 10 or claim 11, comprising providing a range of driving frequencies and frequency sweeping the resultant signals received back to determine signal amplitudes at different frequencies, and sensing damage by sensing a change in the response due to a resistance change in the direct write resistive element of the damage sensor.

13. A method according to any of claims 10 to 12, comprising processing changes in the respective Q-factors of the respective tuned circuits.

14. A method according to any of claims 10 to 13, wherein the plurality of the tuned circuits are coupled to means for performing the discriminating by a shared single pair of external connections.

15. A method according to any of claims 10 to 14, wherein the number of tuned circuits is equal to or greater than 10.

FIG. 1

FIG. 2

FIG. 3

FIG. 4

FIG.5

FIG. 6

FIG. 7

FIG. 8

FIG. 9

Europäisches
Patentamt
European
Patent Office
Office européen
des brevets

# EUROPEAN SEARCH REPORT

Application Number

EP 08 27 5021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 05 203512 A (NIPPON DENSO CO) 10 August 1993 (1993-08-10) | 1-9 | INV. G01M5/00 G01B7/16 G01N3/06 |
| Y | * the whole document * | 10-15 | |
| X | SU 627 380 A1 (NOVOSIBIRSKY ELEKTROTECH INST [SU]) 5 October 1978 (1978-10-05) | 1-5 | |
| Y | * the whole document * | 6-15 | |
| D,X | WO 2007/088395 A (BAE SYSTEMS PLC [GB]; FOOTE PETER DAVID [GB]) 9 August 2007 (2007-08-09) | 1-15 | |
| Y | * the whole document * | 1-15 | |
| Y | US 2005/223812 A1 (DENIS KEVIN L [US]) 13 October 2005 (2005-10-13) * the whole document * | 1-15 | |

TECHNICAL FIELDS
SEARCHED    (IPC)

G01M
G01N
G01L
H01F
G01B
G01D
G01R
G01S

The present search report has been drawn up for all claims

| Place of search | Date of completion of the search | Examiner |
|---|---|---|
| Munich | 24 March 2009 | Poizat, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 08 27 5021

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2009

| Patent document cited in search report | | Publication date | Patent family member(s) | | Publication date |
|---|---|---|---|---|---|
| JP 5203512 | A | 10-08-1993 | NONE | | |
| SU 627380 | A1 | 05-10-1978 | NONE | | |
| WO 2007088395 | A | 09-08-2007 | EP | 1979731 A1 | 15-10-2008 |
| | | | US | 2009007688 A1 | 08-01-2009 |
| US 2005223812 | A1 | 13-10-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007088395 A1

**Non-patent literature cited in the description**

- Proceedings of the 5th International Workshop on Structural Health Monitoring. Stanford University, September 2005